(19) Europäisches Patentamt
European Patent Office
Office européen des brevets

(11) **EP 2 631 445 A1**

(12) **DEMANDE DE BREVET EUROPEEN**

(43) Date de publication:
**28.08.2013 Bulletin 2013/35**

(21) Numéro de dépôt: **13152093.4**

(22) Date de dépôt: **21.01.2013**

(51) Int Cl.:
*F01N 11/00* (2006.01)     *F01N 3/20* (2006.01)
*C01C 1/00* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **22.02.2012  FR 1251588**

(71) Demandeur: **PEUGEOT CITROËN AUTOMOBILES SA**
**78140 Velizy-Villacoublay (FR)**

(72) Inventeurs:
• **Artault, M. Mathieu**
  **92700 COLOMBES (FR)**
• **Grise, Clement**
  **92270 BOIS COLOMBES (FR)**

(54) **Procédé de détermination d'une quantité d'agent réducteur transférée vers une cartouche de stockage d'un système de réduction catalytique**

(57)     L'invention concerne un procédé de détermination d'une quantité d'agent réducteur transférée vers une cartouche de stockage d'un système de réduction catalytique.

Le procédé comporte les étapes suivantes :
- déterminer (51) une température de la cartouche de stockage à différents instants dans l'intervalle de temps,
- déterminer (52), à chaque instant considéré, la quantité d'agent réducteur transférée par unité de temps vers la cartouche de stockage, en fonction de la température déterminée à cet instant considéré, et
- déterminer (53) la quantité d'agent réducteur transférée pendant l'intervalle de temps vers la cartouche de stockage par intégration temporelle des quantités d'agent réducteur transférées par unité de temps.

FIG.2

EP 2 631 445 A1

DÉTERMINATION D'UNE TEMPÉRATURE DE LA CARTOUCHE AUXILIAIRE À DIFFÉRENTS INSTANTS DANS UN INTERVALLE DE TEMPS — 51

DÉTERMINATION DE LA VITESSE D'ABSORPTION DE L'AMMONIAC AUX DIFFÉRENTS INSTANTS CONSIDÉRÉS EN FONCTION DE LA TEMPÉRATURE — 52

DÉTERMINATION DE LA QUANTITÉ D'AMMONIAC ABSORBÉE PAR INTÉGRATION TEMPORELLE — 53

DÉTERMINATION DE LA QUANTITÉ D'AMMONIAC DANS LA CARTOUCHE AUXILIAIRE — 54

# FIG.4

**Description**

L'invention se situe dans le domaine du traitement des oxydes d'azote. Elle se situe plus précisément dans le domaine du stockage d'un agent réducteur pour la réduction catalytique sélective des oxydes d'azote, produits par exemple par les moteurs à combustion des véhicules automobiles. Elle concerne un procédé de détermination d'une quantité d'agent réducteur transférée vers une cartouche de stockage d'un système de réduction catalytique.

Lors de la combustion d'un mélange d'air et de carburant dans un moteur à combustion interne, tel qu'un moteur Diesel ou un moteur à essence, des polluants sont émis dans la ligne d'échappement du moteur. Parmi ces polluants, on trouve essentiellement des oxydes d'azote, à savoir du monoxyde d'azote (NO) et du dioxyde d'azote ($NO_2$), des oxydes de carbone (CO et $CO_2$), et des hydrocarbures imbrûlés (HC). Les normes environnementales en matière de dépollution des gaz d'échappement imposent l'installation de systèmes de post-traitement des gaz d'échappement dans la ligne d'échappement des moteurs. La ligne d'échappement d'un moteur est ainsi munie d'un catalyseur, par exemple un catalyseur à trois voies permettant à la fois la réduction des oxydes d'azote en azote et en eau, l'oxydation du monoxyde de carbone en dioxyde de carbone, et l'oxydation des hydrocarbures imbrûlés en dioxyde de carbone et en eau. En particulier, la réduction des oxydes d'azote en azote et en eau est généralement dénommée réduction catalytique sélective ou SCR selon l'expression anglo-saxonne "Selective Catalytic Reduction". La réduction catalytique sélective nécessite l'injection d'un agent réducteur en amont du catalyseur. L'agent réducteur le plus couramment utilisé est l'ammoniac ($NH_3$). L'ammoniac peut être stocké dans une solution d'urée ou dans un sel solide, par exemple un sel métallique. Le stockage dans un sel métallique est préféré à l'utilisation d'urée dans la mesure où l'extraction de l'ammoniac est facilitée et où la quantité d'ammoniac stockée par unité de volume est bien plus importante.

Un dispositif permettant de stocker de l'ammoniac dans un sel solide et d'en libérer dans une ligne d'échappement en amont d'un système de réduction catalytique sélective comporte par exemple une cartouche de stockage principale, une cartouche de stockage auxiliaire, dite aussi cartouche de démarrage, une canalisation entre la cartouche de stockage principale et la cartouche de stockage auxiliaire, et une canalisation entre les cartouches de stockage et la ligne d'échappement du moteur à combustion interne. Chaque cartouche de stockage contient un sel solide apte à absorber ou adsorber de l'ammoniac, et est équipée de résistances de chauffage. Le sel solide doit également être apte à désorber l'ammoniac, c'est-à-dire à le libérer, sous l'effet de la chaleur. La cartouche de stockage principale présente un volume plus élevé que celui de la cartouche de stockage auxiliaire afin de contenir plus de sel solide.

Cette différence de volume permet, d'une part, d'augmenter rapidement la température et la pression au sein de la cartouche de stockage auxiliaire, et donc de libérer rapidement de l'ammoniac pour le système de réduction catalytique sélective et, d'autre part, de disposer d'une quantité d'ammoniac suffisamment importante pour ne pas avoir à recharger trop fréquemment les cartouches de stockage depuis une source externe. Ainsi, la cartouche de stockage auxiliaire est avantageusement utilisée en phase opérationnelle, c'est-à-dire pendant le fonctionnement du moteur à combustion interne, et la cartouche de stockage principale est utilisée comme source de réapprovisionnement pour la cartouche de stockage auxiliaire en dehors des phases de fonctionnement du moteur. La cartouche de stockage principale peut également être utilisée pendant le fonctionnement du moteur, par exemple pour des phases de fonctionnement prolongées. La quantité d'ammoniac présente dans chaque cartouche de stockage doit pouvoir être déterminée à tout moment. En particulier, il est nécessaire de savoir si la cartouche de stockage auxiliaire est vide, partiellement chargée en ammoniac, ou complètement chargée. Dans le cas où la cartouche auxiliaire est vide, non seulement elle ne fournit plus d'ammoniac au système de réduction catalytique sélective, mais elle est aussi chauffée inutilement. Or l'énergie électrique utilisée pour chauffer la cartouche est en général une source de pollution en oxydes d'azote. La cartouche de stockage principale doit alors être utilisée pour recharger la cartouche auxiliaire, ou pour alimenter le système de réduction catalytique sélective en ammoniac, voire les deux à la fois. Dans le cas où la cartouche auxiliaire est complètement chargée, il est en revanche inutile de chauffer la cartouche principale. Afin de déterminer la quantité d'ammoniac présente dans chaque cartouche, une solution consiste à placer une jauge mécanique telle qu'un débitmètre au niveau de leurs voies d'entrée-sortie. Cependant, pour des raisons d'encombrement et de coût, une telle solution n'est généralement pas possible.

Un but de l'invention est notamment de fournir une solution simple, économique et fiable pour estimer la quantité d'ammoniac transférée vers une cartouche de stockage pendant une durée donnée. À partir de cette quantité transférée et connaissant la quantité d'ammoniac initialement présente dans la cartouche de stockage, l'invention permet de déterminer la quantité d'ammoniac présente dans la cartouche de stockage. À cet effet, l'invention a pour objet un procédé de détermination d'une quantité d'agent réducteur transférée pendant un intervalle de temps vers une cartouche de stockage d'un système de réduction catalytique sélective. La cartouche de stockage contient un support de stockage solide apte à absorber ou adsorber l'agent réducteur transféré. Le procédé se caractérise en ce qu'il comprend :

- une étape de détermination d'une température de la cartouche de stockage à différents instants dans l'intervalle de temps,

- une étape de détermination, à chaque instant considéré, de la quantité d'agent réducteur transférée par unité de temps vers la cartouche de stockage, en fonction de la température déterminée à cet instant considéré, et
- une étape de détermination de la quantité d'agent réducteur transférée pendant l'intervalle de temps vers la cartouche de stockage par intégration temporelle des quantités d'agent réducteur transférées par unité de temps.

Selon une forme particulière de réalisation, chaque quantité d'agent réducteur transférée par unité de temps est déterminée par la loi d'Arrhenius. Une énergie d'activation de la réaction d'absorption ou d'adsorption de l'agent réducteur par le support de stockage solide et un facteur pré-exponentiel sont prédéterminés pour chaque instant considéré.

L'énergie d'activation et le facteur pré-exponentiel sont par exemple déterminés à chaque instant considéré en fonction d'une évolution de la pression au sein de la cartouche de stockage à cet instant considéré et d'une quantité d'agent réducteur initialement présente dans la cartouche de stockage.

L'évolution de la pression au sein de la cartouche de stockage peut être sensiblement constante dans tout l'intervalle de temps. Elle peut aussi varier dans l'intervalle de temps, par exemple augmenter de manière sensiblement constante dans une première partie de l'intervalle de temps, et rester sensiblement constante dans une deuxième partie de l'intervalle de temps. Dans ce cas, une première énergie d'activation et un premier facteur pré-exponentiel sont déterminés pour la première partie de l'intervalle de temps en fonction d'une évolution de la pression dans cette première partie de l'intervalle de temps et de la quantité d'agent réducteur initialement présente dans la cartouche de stockage, et une deuxième énergie d'activation et un deuxième facteur pré-exponentiel sont déterminés pour la deuxième partie de l'intervalle de temps en fonction de l'évolution de la pression dans cette deuxième partie de l'intervalle de temps et de la quantité d'agent réducteur présente dans la cartouche de stockage au début de l'intervalle de temps ou au début de la deuxième partie de l'intervalle de temps.

Le système de réduction catalytique peut comprendre, outre la première cartouche de stockage, une deuxième cartouche de stockage apte à libérer de l'agent réducteur par une augmentation de sa température, et des moyens pour chauffer la deuxième cartouche de stockage, l'agent réducteur libéré de la deuxième cartouche de stockage étant apte à être absorbé par le support de stockage solide de la première cartouche de stockage. L'évolution de la pression au sein de la première cartouche de stockage peut être régulée par les moyens pour chauffer la deuxième cartouche de stockage.

Selon une forme particulière de réalisation, l'énergie d'activation et le facteur pré-exponentiel sont déterminés à chaque instant considéré par une table prédéterminée en fonction d'une évolution de la pression prédéterminée, la table prenant comme variable d'entrée la quantité d'agent réducteur initialement présente dans la cartouche de stockage.

L'agent réducteur considéré est par exemple de l'ammoniac.

L'invention présente notamment l'avantage qu'elle permet de déterminer la quantité d'agent réducteur transférée par unité de temps sans nécessiter de capteur supplémentaire, un capteur de température étant déjà présent au niveau des cartouches de stockage. En outre, cette détermination est relativement fiable et précise.

L'invention sera mieux comprise et d'autres avantages apparaîtront à la lecture de la description détaillée donnée à titre d'exemple non limitatif et faite en regard de dessins annexés sur lesquels :

- la figure 1 représente un exemple de système de réduction catalytique sélective auquel peut s'appliquer l'invention ;

- la figure 2 représente un exemple d'évolution en fonction du temps de la température au sein d'une cartouche de stockage lors d'un rechargement en agent réducteur ;

- la figure 3 illustre la variation d'une énergie d'activation et d'un facteur pré-exponentiel de la loi d'Arrhenius lors d'un rechargement en fonction de l'état de chargement initial ;

- la figure 4 représente un exemple d'étapes du procédé selon l'invention.

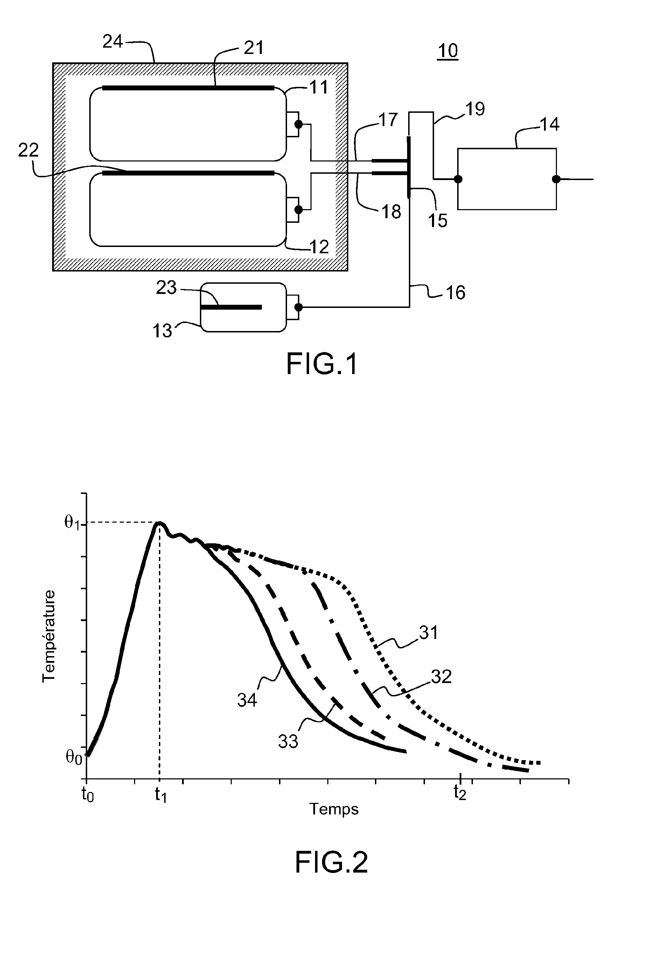

La figure 1 représente un exemple de système de réduction catalytique sélective auquel peut s'appliquer l'invention. À titre d'exemple, on considère le cas particulier d'un système de réduction catalytique sélective implanté dans la ligne d'échappement d'un moteur à combustion interne. On considère également que l'agent réducteur est de l'ammoniac. Cependant, l'invention s'applique à tout système de réduction catalytique. Le système de réduction catalytique sélective 10 comporte deux cartouches de stockage principales 11 et 12, une cartouche de stockage auxiliaire 13, un catalyseur 14, un collecteur 15, une canalisation 16 reliant le collecteur 15 à la cartouche de stockage auxiliaire 13, des canalisations 17 et 18 reliant le collecteur 15 aux cartouches principales 11 et 12, respectivement, et une canalisation 19 reliant le collecteur 15 au catalyseur 14. Le système de réduction catalytique sélective 10 pourrait bien entendu comporter une unique cartouche de stockage principale ou un plus grand nombre de ces cartouches. Les cartouches de stockage sont généralement de forme cylindrique ou ovoïde. Elles contiennent chacune un support de stockage solide apte à absorber ou adsorber l'agent réducteur (l'ammoniac) sous forme gazeuse.

Le support de stockage est par exemple un complexe aminé de formule $M_a(NH_3)_nX_z$, où M est un ou plusieurs cations sélectionnés parmi les métaux alcalin tels que Li, Na, K ou Cs, les métaux alcalino-terreux tels que Mg, Ca ou Sr, et/ou les métaux de transition tels que V, Cr, Mn, Fe, Co, Ni, Cu ou Zn, ou une combinaison de ces éléments telle que NaAl, KAl, $K_2$Zn, CsCu, ou $K_2$Fe, où a est le nombre de cations par molécule, où n est le nombre de coordination, compris entre 1 et 12, où X est un ou plusieurs anions sélectionnés parmi les ions fluorure, chlorure, bromure, iodure, nitrate, thyocyanate, sulfate, molybdène et phosphate, et où z est le nombre d'anions par molécule. Le complexe aminé est communément appelé sel solide.

Les cartouches de stockage sont aptes à libérer de l'ammoniac sous forme gazeuse par désorption sous l'effet d'une augmentation de la température. À cet effet, chaque cartouche de stockage 11, 12, 13 comporte des moyens de chauffage, par exemple une résistance électrique. Il est également possible de chauffer les cartouches de stockage au moyen des gaz d'échappement circulant dans la ligne d'échappement, non représenté. Dans l'exemple de réalisation représenté sur la figure 1, les cartouches principales 11 et 12 sont chauffées chacune par une résistance électrique 21, 22 disposée sur leur surface externe, et la cartouche auxiliaire 13 est chauffée par une résistance électrique 23 disposée dans son volume intérieur. Les cartouches principales 11 et 12 présentent un volume plus élevé que celui de la cartouche auxiliaire 13. Ainsi, la cartouche auxiliaire 13 peut chauffer plus rapidement que les cartouches principales et être utilisée rapidement après le démarrage du moteur pour fournir de l'ammoniac. Les cartouches principales 11 et 12 peuvent être utilisées pour fournir de l'ammoniac pendant les phases de fonctionnement prolongées du moteur, et pour recharger la cartouche auxiliaire 13 en ammoniac. Le rechargement de la cartouche auxiliaire 13 est facilité lorsque la température de cette cartouche est inférieure à celle de la cartouche principale 11 ou 12 utilisée pour le rechargement. Afin d'aider à maintenir un écart de température après l'arrêt du moteur à combustion interne, les cartouches principales 11 et 12 peuvent être disposées dans un caisson 24 isolé thermiquement, comme représenté sur la figure 1.

Le rechargement de la cartouche auxiliaire 13 à partir des cartouches principales 11 et 12 peut intervenir dans plusieurs situations. En particulier, dans le cas où la ligne d'échappement du moteur à combustion interne comporte un filtre à particules, un rechargement peut être effectué lors d'une régénération de ce filtre à particules. Un rechargement peut aussi être effectué lorsque des conditions de roulage sur une autoroute sont détectées, ou lorsque la quantité d'ammoniac présente dans la cartouche auxiliaire 13 passe en dessous d'un seuil prédéterminé. L'invention vise à déterminer la quantité d'ammoniac adsorbée ou absorbée par le sel solide de la cartouche auxiliaire 13 pendant un rechargement. Elle repose sur le fait que la réaction d'absorption de l'ammoniac par le sel solide est exothermique. Plus précisément, l'invention propose de surveiller l'évolution de la température au sein de la cartouche auxiliaire 13 pendant la durée du rechargement afin de déterminer la vitesse de la réaction d'absorption ou d'adsorption puis, par intégration temporelle, de déterminer la quantité d'ammoniac rechargée. La température de la cartouche auxiliaire 13 peut être déterminée par un capteur de température placé sur sa surface extérieure ou, préférentiellement, dans son volume intérieur.

La figure 2 représente un exemple d'évolution en fonction du temps de la température au sein de la cartouche auxiliaire lors d'un rechargement en agent réducteur. L'axe des abscisses correspond au temps et l'axe des ordonnées à la température. Durant toute la durée du rechargement, l'une des cartouches principales 11 ou 12, voire les deux, est chauffée par la résistance électrique 21 ou 22. Dans une première phase du rechargement, comprise entre des instants $t_0$ et $t_1$, la cartouche principale 11 ou 12 est chauffée en continu, de sorte que la pression dans le système de réduction catalytique sélective 10 augmente de manière sensiblement constante. À titre d'exemple, la pression augmente de 0,5 bar à l'instant $t_0$, à 5 bars à l'instant $t_1$. Lorsque la pression atteint un seuil prédéterminé à l'instant $t_1$, par exemple 5 bars, le rechargement passe dans une deuxième phase. Dans cette phase, le chauffage de la cartouche principale 11 ou 12 est régulé de manière à maintenir une pression sensiblement constante autour du seuil prédéterminé. La deuxième phase se poursuit par exemple jusqu'à ce que la cartouche auxiliaire 13 soit entièrement rechargée. En pratique, la deuxième phase peut se poursuivre jusqu'à ce que la quantité d'ammoniac présente dans la cartouche auxiliaire 13 dépasse un seuil prédéterminé, ou jusqu'à ce que la température de la cartouche auxiliaire 13 devienne inférieure à un seuil prédéterminé. La deuxième phase peut également se poursuivre jusqu'à ce que la cartouche auxiliaire 13 soit à nouveau sollicitée pour fournir de l'ammoniac. De manière générale, on note $t_2$ l'instant auquel la deuxième phase est stoppée. Dans chacune des phases du rechargement, le chauffage d'une cartouche principale 11 ou 12 a pour effet de désorber de l'ammoniac du sel solide, c'est-à-dire de libérer de l'ammoniac de la cartouche considérée. Cet ammoniac libéré est alors absorbé ou adsorbé par le sel solide de la cartouche auxiliaire 13. La réaction d'absorption se traduit par une augmentation de la température de la cartouche auxiliaire 13 par rapport à sa température initiale. Sur le graphique de la figure 2, plusieurs courbes d'évolution de la température de la cartouche auxiliaire 13 lors d'un rechargement sont représentées. Ces courbes, repérées 31 à 34, correspondent respectivement à des états de chargement initiaux de la cartouche auxiliaire 13 de 20%, 50%, 65% et 80%. Par état de chargement initial, on entend la quantité d'ammoniac présente dans la cartouche auxiliaire 13 à l'instant $t_0$. Comme le montre le graphique de la figure 2, l'augmentation de la température de la cartouche auxiliaire 13 est sensiblement identique dans la première phase, quel que soit son état de chargement initial. La température passe d'une valeur initiale $\theta_0$, correspondant par exemple à la température ambiante, à une valeur $\theta_1$ entre les instants $t_0$ et $t_1$. En revanche, l'évolution de la température diffère dans la deuxième phase en fonction de l'état de chargement initial. En particulier, plus la cartouche auxiliaire 13 est chargée initialement, plus sa température décroît rapidement à partir de l'instant $t_1$. En effet, moins le sel solide absorbe d'ammoniac, moins la quantité de chaleur dégagée par la réaction d'absorption est importante.

La détermination de la quantité d'ammoniac absorbée ou adsorbée par la cartouche auxiliaire peut s'appuyer sur la loi d'Arrhenius, par exemple exprimée par la relation :

$$\nu = \nu_0 . \exp\left(E_a / R.T\right),$$

où $\nu$ désigne la vitesse d'absorption ou d'adsorption de l'ammoniac par le sel solide, $\nu_0$ désigne le facteur pré-exponentiel, $E_a$ désigne l'énergie d'activation de la réaction d'absorption ou d'adsorption, $R$ désigne la constante des gaz parfaits, et $T$ désigne la température. Plus précisément, la vitesse d'absorption $\nu$ est définie par le poids d'ammoniac absorbé par unité de temps, par exemple en milligrammes par seconde. Il s'agit donc d'une quantité par unité de temps. À partir de la connaissance de l'énergie d'activation $E_a$ et du facteur pré-exponentiel $\nu_0$, il est ainsi possible de déterminer la vitesse d'absorption en fonction de la température. Dans la première phase de rechargement, l'énergie d'activation $E_a$ et le facteur pré-exponentiel $\nu_0$ sont sensiblement identiques quel que soit l'état de chargement initial de la cartouche auxiliaire 13. En revanche, dans la deuxième phase de rechargement, l'énergie d'activation $E_a$ et le facteur pré-exponentiel $\nu_0$ dépendent de l'état de chargement initial. Ainsi, de manière générale, l'énergie d'activation $E_a$ et le facteur pré-exponentiel $\nu_0$ dépendent non seulement de l'état de chargement initial, mais aussi de la phase de rechargement, c'est-à-dire de l'évolution de la pression dans la cartouche auxiliaire 13.

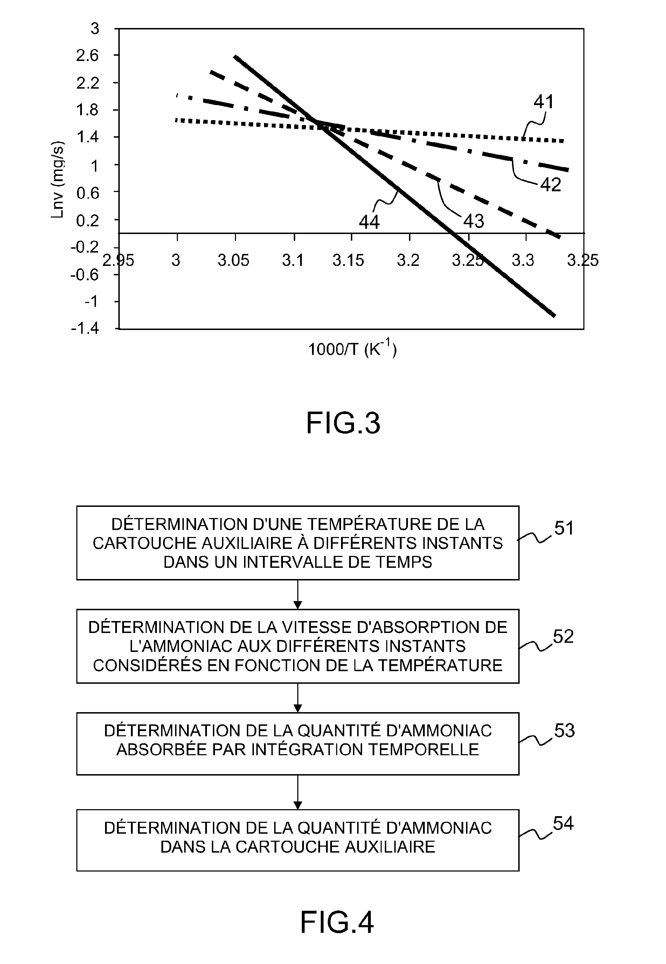

La figure 3 illustre la variation de l'énergie d'activation $E_a$ et du facteur pré-exponentiel $\nu_0$ dans la deuxième phase de rechargement en fonction de l'état de chargement initial. L'axe des abscisses correspond à mille fois l'inverse de la température en Kelvin, et l'axe des ordonnées correspond au logarithme népérien de la vitesse d'absorption en milligrammes par seconde. Des courbes 41 à 44 sont tracées respectivement pour des états de chargement initiaux de 20%, 50%, 65% et 80%. La pente de ces courbes permet de déterminer l'énergie d'activation $E_a$ associée à chaque état initial, et l'ordonnée à l'origine permet de déterminer le facteur pré-exponentiel $\nu_0$. Les différentes valeurs de l'énergie d'activation $E_a$ et du facteur pré-exponentiel $\nu_0$ sont par exemple stockées dans une table prenant comme variable d'entrée l'état de chargement initial. Alternativement, les différentes valeurs de l'énergie d'activation $E_a$ et du facteur pré-exponentiel $\nu_0$ peuvent être déterminées en fonction de l'état de chargement à l'instant $t_2$ où débute la deuxième phase de rechargement.

La figure 4 représente un exemple d'étapes du procédé selon l'invention. Dans une première étape 51, la température de la cartouche auxiliaire 13 est déterminée à différents instants d'un intervalle de temps. Cet intervalle de temps est considéré pendant un rechargement de la cartouche auxiliaire 13 et s'étale de préférence pendant toute la durée du rechargement. La température est par exemple déterminée à intervalles réguliers, par exemple toutes les secondes. Dans une deuxième étape 52, pour chaque instant considéré, la vitesse d'absorption est déterminée en fonction de la température à cet instant. Dans une troisième étape 53, la quantité d'ammoniac absorbée par la cartouche auxiliaire 13 pendant l'intervalle de temps est déterminée par intégration temporelle des différentes vitesses d'absorption. L'étape 52 peut bien entendu être réalisée en calculant la vitesse d'absorption au moyen de la loi d'Arrhenius, comme expliqué ci-dessus, en prenant en compte l'énergie d'activation $E_a$ et le facteur pré-exponentiel $\nu_0$ correspondant à l'instant considéré. En pratique, pour un rechargement donné, l'état de chargement initial peut être déterminé facilement. De même, la phase du rechargement (première ou deuxième) peut être déterminée facilement pour chaque instant considéré. L'énergie d'activation $E_a$ et le facteur pré-exponentiel $\nu_0$ peuvent alors être déterminés pour chaque instant considéré, par exemple au moyen de la table prédéterminée. Le procédé peut comprendre une étape supplémentaire 54 dans laquelle la quantité d'ammoniac présente dans la cartouche auxiliaire 13 est déterminée par addition de la quantité d'ammoniac présente initialement et de la quantité d'ammoniac absorbée pendant le rechargement.

## Revendications

1. Procédé de détermination d'une quantité d'agent réducteur transférée pendant un intervalle de temps vers une cartouche de stockage (13) d'un système de réduction catalytique sélective (10), la cartouche de stockage (13) contenant un support de stockage solide apte à absorber ou adsorber l'agent réducteur transféré, le procédé étant **caractérisé en ce qu'**il comprend :

    - une étape (51) de détermination d'une température de la cartouche de stockage (13) à différents instants dans l'intervalle de temps,
    - une étape (52) de détermination, à chaque instant considéré, de la quantité d'agent réducteur transférée par unité de temps vers la cartouche de stockage (13), en fonction de la température déterminée à cet instant considéré, et

- une étape (53) de détermination de la quantité d'agent réducteur transférée pendant l'intervalle de temps vers la cartouche de stockage (13) par intégration temporelle des quantités d'agent réducteur transférées par unité de temps.

2. Procédé selon la revendication 1, dans lequel chaque quantité d'agent réducteur transférée par unité de temps est déterminée par la loi d'Arrhenius, une énergie d'activation de la réaction d'absorption ou d'adsorption de l'agent réducteur par le support de stockage solide et un facteur pré-exponentiel étant prédéterminés pour chaque instant considéré.

3. Procédé selon la revendication 2, dans lequel l'énergie d'activation et le facteur pré-exponentiel sont déterminés à chaque instant considéré en fonction d'une évolution de la pression au sein de la cartouche de stockage (13) à cet instant considéré et d'une quantité d'agent réducteur initialement présente dans la cartouche de stockage (13).

4. Procédé selon la revendication 3, dans lequel l'évolution de la pression au sein de la cartouche de stockage (13) est sensiblement constante dans tout l'intervalle de temps.

5. Procédé selon la revendication 3, dans lequel la pression au sein de la cartouche de stockage (13) augmente de manière sensiblement constante dans une première partie de l'intervalle de temps, et reste sensiblement constante dans une deuxième partie de l'intervalle de temps, une première énergie d'activation et un premier facteur pré-exponentiel étant déterminés pour la première partie de l'intervalle de temps en fonction d'une évolution de la pression dans cette première partie de l'intervalle de temps et de la quantité d'agent réducteur initialement présente dans la cartouche de stockage (13), et une deuxième énergie d'activation et un deuxième facteur pré-exponentiel étant déterminés pour la deuxième partie de l'intervalle de temps en fonction de l'évolution de la pression dans cette deuxième partie de l'intervalle de temps et de la quantité d'agent réducteur présente dans la cartouche de stockage (13) au début de l'intervalle de temps ou au début de la deuxième partie de l'intervalle de temps.

6. Procédé selon l'une des revendications 3 à 5, dans lequel le système de réduction catalytique (10) comprend, outre la première cartouche de stockage (13), une deuxième cartouche de stockage (11, 12) apte à libérer de l'agent réducteur par une augmentation de sa température, et des moyens pour chauffer la deuxième cartouche de stockage (11, 12), l'agent réducteur libéré de la deuxième cartouche de stockage étant apte à être absorbé par le support de stockage solide de la première cartouche de stockage (13), l'évolution de la pression au sein de la première cartouche de stockage (13) étant régulée par les moyens pour chauffer la deuxième cartouche de stockage (11, 12).

7. Procédé selon l'une des revendications 3 à 6, dans lequel l'énergie d'activation et le facteur pré-exponentiel sont déterminés à chaque instant considéré par une table prédéterminée en fonction d'une évolution de la pression prédéterminée, la table prenant comme variable d'entrée la quantité d'agent réducteur initialement présente dans la cartouche de stockage (13).

8. Procédé selon l'une des revendications précédentes, dans lequel l'agent réducteur est de l'ammoniac.

FIG.1

FIG.2

FIG.3

FIG.4

EP 2 631 445 A1

Europäisches
Patentamt

European
Patent Office

Office européen
des brevets

**RAPPORT DE RECHERCHE EUROPEENNE**

Numéro de la demande

EP 13 15 2093

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 236 784 A1 (AMMINEX AS [DK]) 6 octobre 2010 (2010-10-06) * alinéas [0013], [0014], [0035], [0041], [0042]; figure 1 * ----- | 1-8 | INV. F01N11/00 F01N3/20 C01C1/00 |
| A | EP 2 361 883 A1 (AMMINEX AS [DK]) 31 août 2011 (2011-08-31) * le document en entier * ----- | 1-8 | |

DOMAINES TECHNIQUES RECHERCHES (IPC)

F01N
C01C

Le présent rapport a été établi pour toutes les revendications

| Lieu de la recherche | Date d'achèvement de la recherche | Examinateur |
|---|---|---|
| La Haye | 15 février 2013 | Nobre Correia, S |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
..............................................................
& : membre de la même famille, document correspondant

EPO FORM 1503 03.82 (P04C02)

10

**ANNEXE AU RAPPORT DE RECHERCHE EUROPEENNE
RELATIF A LA DEMANDE DE BREVET EUROPEEN NO.**

EP 13 15 2093

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-02-2013

| Document brevet cité au rapport de recherche | Date de publication | Membre(s) de la famille de brevet(s) | Date de publication |
|---|---|---|---|
| EP 2236784 A1 | 06-10-2010 | EP 2236784 A1<br>EP 2409006 A1<br>US 2012045379 A1<br>WO 2010105833 A1 | 06-10-2010<br>25-01-2012<br>23-02-2012<br>23-09-2010 |
| EP 2361883 A1 | 31-08-2011 | CN 102781835 A<br>EP 2361883 A1<br>EP 2539277 A2<br>WO 2011103968 A2 | 14-11-2012<br>31-08-2011<br>02-01-2013<br>01-09-2011 |

EPO FORM P0460

Pour tout renseignement concernant cette annexe : voir Journal Officiel de l'Office européen des brevets, No.12/82